# FASCICULE DE BREVET EUROPEEN

(11) **EP 0 601 938 B1**
(45) Date de publication et mention de la délivrance du brevet: **22.04.1998**
(21) Numéro de dépôt: 93420466.0
(22) Date de dépôt: 24.11.1993
(51) Int. Cl.: C08L 83/04, C09D 183/04, C09J 7/02

(54) **Système silicone modulateur d'adhérence et son utilisation pour la préparation de compositions anti-adhérantes durcissables**
Haftungregulierendes Siliconsystem und seine Anwendung in härtbare nicht-haftende Zusammensetzungen
Adhesion-regulating selicane system and its use in curable non-stick compositions

(30) Priorité: 04.12.1992 FR 9214620
(43) Date de publication de la demande: 15.06.1994
(73) Titulaire: RHODIA CHIMIE, 92408 Courbevoie Cédex (FR)
(72) Inventeur: Chizat, François, F-69500 Bron (FR); Soldat, André, F-69008 Lyon (FR)
(74) Mandataire: Trolliet, Maurice

(56) Documents cités:
- EP-A- 0 053 471
- EP-A- 0 108 208
- EP-A- 0 219 720

## Description

La présente invention a pour objet un nouveau système silicone modulateur d'adhérence, et son utilisation pour la préparation de compositions silicones durcissables applicables sur des supports, de manière à faciliter l'enlèvement de matières adhésives, desdits supports.

Il est connu (brevet français No 2 450 642) d'utiliser des solutions de résine vinylpolysiloxane dans une huile silicone vinylée additionnées d'un réticulant méthylhydrogénopolysiloxane soluble dans les solutions de résine, d'un inhibiteur et d'un catalyseur de réaction d'addition, pour revêtir des supports comme du papier, des feuilles minces d'aluminium ...afin de permettre le détachement contrôlé, à partir desdits supports, de matières adhésives sensibles à la pression, telles que les adhésifs acryliques. Ce type de composition présente l'inconvénient de n'être que d'une efficacité moyenne vis-à-vis d'autres adhésifs, en particulier ceux de type caoutchouc styrène-butadiène.

Il a été également proposé (brevet US -A- 3,772,247) de traiter les supports en papier à l'aide de compositions contenant des résines organohydrogénopolysiloxanes comme modulateurs d'adhérence, pour permettre le détachement contrôlé d' adhésifs à base de caoutchoux. De telles compositions sont peu performantes vis-à-vis des adhésifs acryliques.

EP-A-0 108 208 et EP-A-0 053 471 décrivent des silicones durcissables modulateurs d'adhérence.

La demanderesse a trouvé un nouveau système silicone modulateur d'adhérence pouvant être mis en oeuvre pour la préparation de compositions durcissables permettant le détachement contrôlé de tout type d'adhésif, acrylique ou caoutchoux, de supports divers (papier, verre, matière plastique, métal...) . En outre le complexe formé ("laminate") par le support enduit par la composition silicone durcie et le système adhésif présente une excellente stabilité quant à ses performances d'adhérence dans le temps ("stability of release performance").

Selon l'invention, il s'agit d'un système modulateur d'adhérence à base de :
- (A) 30 à 70 parties, de préférence 40 à 60 parties en poids d'au moins une résine organopolysiloxane se présentant sous forme solide à l'état sec et à 25°C constituée d'au moins deux types de motifs siloxy différents R₃SiO_{1/2} (motif M) et SiO₂ (motif Q) et/ou RSiO_{3/2} (motif T), et éventuellement de motifs R₂SiO (motif D), les radicaux R étant identiques ou différents et représentant des groupes alkyle ou cycloalkyle en C₁-C₁₈, alcényle en C₂-C₂₀, de préférence en C₂-C₁₂, alcényl(C₃-C₉)oxyalkylène(C₂-C₄), au moins 80% molaire des radicaux R représentant un groupe méthyle, ladite résine contenant au moins 0,1% molaire, de préférence de 0,5 à 5% molaire desdits groupes alcényle ou alcényloxyalkylène identiques ou différents liés au silicium ("Si alcényle"), avec un rapport nombre de motifs (M) / nombre de motifs (Q) et/ou (T) de 0,6-1, le nombre de motifs (D) éventuels étant de 0,5-10 pour 100 moles de résine ;
- (B) 70 à 30 parties, de préférence 60 à 40 parties en poids d'au moins une résine organopolysiloxane se présentant sous forme solide à l'état sec et à 25°C, constituée d'au moins deux types de motifs siloxy différents R'₃SiO_{1/2} (motif M) et SiO₂ (motif Q) et/ou R'SiO_{3/2} (motif T), et éventuellement de motifs R'₂SiO (motif D), les radicaux R' étant semblables ou différents et representant de l'hydrogène ou des groupes de définition semblable à celle de R, au moins 80% molaire des radicaux R' représentant un groupe méthyle, ladite résine contenant au moins 0,5% molaire, de préférence de 0,5 à 5% molaire d'atomes d'hydrogène liés directement au silicium ("SiH"), avec un rapport nombre de motifs (M) / nombre de motifs (Q) et/ou (T) de 0,6-1, le nombre de motifs (D) éventuels étant de 0,5-10 pour 100 moles de résine;
   lesdites résines (A) et (B) contenant moins de 10 % molaire, de préférence moins de 0,5% molaire et tout particulièrement moins de 0,3% molaire de fonctions silanol;
- (C) au moins un solvant ou au moins un diluant du mélange de résines (A) et (B).

Les résines à fonctions "Si alcényle" (A), notamment les résines vinylées, sont bien connues de l'homme de l'art; les groupes alcényle ou alcényloxy peuvent être situés sur les motifs (M), (D) ou (T) ; elles peuvent être préparées par exemple selon le procédé décrit dans le brevet US -A- 2 676 182 ; un traitement bien connu de l'homme de l'art, à l'aide d'un silazane, permet d' abaisser à moins de 0,3 % en poids, le taux de fonctions silanol restantes , ce afin d'éviter des réactions parasites de condensation.
Un certain nombre de ces résines sont disponibles dans le commerce, le plus souvent à l'état de solutions, par exemple à 40-70 % dans un solvant tel que le toluène ou le xylène.

On peut citer à titre d'exemple les résines solides
. MD^{Vi}Q où les groupes vinyle sont inclus dans les motifs (D) ;
. MM^{Vi}Q où les groupes vinyle sont inclus dans une partie des motifs (M)
. MD^{Vi}T où les groupes vinyle sont inclus dans les motifs (D)
. MM^{Héxényl}Q où les groupes héxényle sont inclus dans une partie des motifs (M)
. MM^{Allyloxypropyl}Q où les groupes allyloxypropyle sont inclus dans une partie des motifs (M)

Les résines à fonctions "Si H" (B) sont également bien connues ; elles sont notamment décrites dans le brevet US-A-3,772,247 ; les atomes d'hydrogène peuvent être situés dans la chaîne ou en bout(s) de chaîne ; un certain nombre de ces résines sont disponibles dans le commerce.

On peut citer à titre d'exemple les résines solides
. MD'Q où les atomes d'hydrogène liés au silicium sont inclus dans les motifs (D)
. MM'Q où les atomes d'hydrogène liés au silicium sont inclus dans une partie des motifs (M)
. MM'DQ où les atomes d'hydrogène liés au silicium sont inclus dans une partie des motifs (M)
. MDT' où les atomes d'hydrogène liés au silicium sont inclus dans les motifs (T)

A titre de solvants ou de diluants (C) de ces résines solides, peuvent être mis en oeuvre :
- (1) des solvants hydrocarbonés classiques des résines silicone, solvants de type aromatique (xylène, toluène........), aliphatique saturé (héxane, heptane, white-spirit, tétrahydrofuranne, diethyléther.....), solvants chlorés (chlorure de méthylène, perchloroéthylène...).
   Ils sont généralement mis en oeuvre selon une quantité correspondant à 50-70 parties en poids pour 30-50 parties en poids de résines solides (A)+(B).
- (2) des solvants dits "réactifs" tels que
   . (a) des résines organopolysiloxane liquides, dont les radicaux organiques sont des groupes alkyle ou cycloalkyle en C₁-C₁₈, alcényle en C₂-C₂₀, de préférence en C₂-C₁₂, présentant un rapport nombre de motifs (M) / nombre de motifs (Q) et/ou (T) de l'ordre de 1 à 4 et éventuellement de 1 à 5 motifs (D) pour 100 moles de résine liquide, et contenant de 0,5 à 5 % molaire de fonctions alcényle liées au silicium ("Si alcényle") ou d' atomes d'hydrogène liés au silicium ("SiH") ; ces résines présentent une viscosité à 25°C inférieure à 100 mPas., de préférence de l'ordre de 2 à 50 mPas..
      Ces résines liquides sont des produits connus ; elles sont notamment décrites dans le brevet US -A- 4,707,531 et la demande européenne EP -A- 389 138.
   . et/ou (b) des huiles organopolysiloxanes fluides, dont les radicaux organiques sont des groupes alkyle ou cycloalkyle en C₁-C₁₈, alcényle en C₂-C₂₀, alcényl(C₃-C₉)oxyalkylène(C₂-C₄) , huiles contenant de 0,2 à 5 % molaire de fonctions alcényle ou alcényloxyalkylène liées au silicium, en bout(s) de chaîne ou dans la chaîne, lesdites huiles présentant une viscosité inférieure à 200 mPa. s.
   . et/ou (c) des hydrocarbures à insaturation(s) oléfinique(s) tels que oléfines en C₁₄-C₁₈, dibutylmaléate, décylvinyléther, dodécylvinyléther, camphène, méta-bis isopropénylbenzène...
      Les solvants dits "réactifs" sont généralement mis en oeuvre selon une quantité correspondant à 20-50 parties en poids pour 80-50 parties en poids de résines solides (A)+(B).
- (3) des émulsions aqueuses d'agents tensio-actifs non-ioniques (alcool polyvinylique, alkylphénolpolyéthoxylés, éthers oxyéthylénés d'alcools gras ...) contenant généralement de l'ordre de 1-3% en poids d'agent tensio-actif. Elles sont généralement mises en oeuvre à raison de 40-70 parties en poids pour 60-30 parties en poids de résines solides (A)+(B).

Le système modulateur d'adhérence de l'invention, peut être obtenu par mélange des constituants (A), (B) et (C) jusqu'à mise en solution ou dilution des résines solides (A) et (B) dans le solvant ou diluant (C).

La présente invention a également pour objet les compositions durcissables anti-adhérentes renfermant :
- (100-x) parties en poids d'un polydiorganosiloxane linéaire (D) bloqué par des groupes terminaux triorganosiloxanes, lesdits radicaux organiques étant des groupes alkyle ou cycloalkyle en C₁-C₁₈, alcényle en C₂-C₂₀, de préférence en C₂-C₁₂, alcényl(C₃-C₉)oxyalkylène(C₂-C₄),au moins 80% molaire desdits radicaux étant un groupe méthyle, au moins 0,1% molaire, de préférence de 0,5 à 5% molaire desdits radicaux organiques étant des groupes alcényle ou alcényloxyalkylène identiques ou différents liés directement au silicium ("Si alcényle").
- x parties en poids du système modulateur à base des constituants (A), (B) et (C) ci-dessus décrit, la valeur de x pouvant aller de 5 à 100, de préférence de 5 à 95 et tout particulièrement de 10 à 50 ;
- un agent inhibiteur d'hydrosilylation ;
- un agent de réticulation polyorganohydrogénosiloxane linéaire (E) contenant de 1,6 à 0,9 % molaire d'atomes d'hydrogène liés directement au silicium ("SiH") en bout(s) de chaîne et/ou dans la chaîne, les radicaux organiques identiques ou différents étant des groupes alkyles en C₁-C₁₈ , au moins 80 % molaire desdits radicaux organiques étant des groupes méthyle, la quantité d'agent de réticulation étant telle que le rapport nombre de moles de "SiH" provenant de la résine (B), du solvant "réactif" (C) et de l'agent de réticulation (E) / nombre de moles de "Si alcényle" provenant de la résine (A), du solvant "réactif"(C) et du polydiorganosiloxane (D) linéaire bloqué soit supérieur à 1, de préférence de l'ordre de 1,1 à 1,6;
- une quantité efficace d'un catalyseur d'hydrosilylation

Le polydiorganosiloxane linéaire bloqué à fonctions "Si alcényle" (D) présente une viscosité d'au moins 50 mPas., généralement de l'ordre de 150 à 1000 mPas.; il peut contenir quelques traces de motifs siloxanes non linéaires (T) et/ou (Q).
Les huiles vinylées sont des produits du commerce habituellement mises en oeuvre pour préparer des compositions durcissables antiadhérentes (brevet US-A- 4,623,700)
Les huiles à groupements alcényle plus lourds ou alcényloxyalkylène sont décrites notamment dans les brevets EP - B- 219 720 et EP-A-454 130.

L'agent de réticulation à fonctions "Si H" (E) présente une viscosité inférieure à 200 mPa.s., de préférence de l'ordre de 5 à 150 mPa.s. Des exemples de ces agents de réticulation sont donnés dans le brevet US - A-4,623,700 et le brevet européen EP -B- 219 720.

Parmi les catalyseurs pouvant être présents on peut citer les dérivés et complexes bien connus de métaux tels que platine, rhodium, ruthénium... Des exemples de catalyseurs sont donnés dans les brevets US-A- 3,159,601 ; 3,159,662 ; 3,220,972 ; 3,715,334; 3,775,452 ; 3,814,730 ; 3,296,291; 3,928,629 ; français FR-A-1 313 846 ; 1 480 409. Ils sont généralement mis en en oeuvre selon une quantité de l'ordre de 5 à 500 parties en poids exprimées en métal par million de parties en poids de polymères silicones réactifs.

L'agent inhibiteur d'hydrosilylation est présent en quantité telle qu'il inhibe l'action du catalyseur à température ambiante, cette action inhibitrice cessant lors du traitement de réticulation à température élevée ; cette quantité est généralement de l'ordre de 0,01 à 1 partie en poids, de préférence de l'ordre de 0,1 à 0,25 partie en poids pour 100 parties du poids total de silicone. Parmi les inhibiteurs, on peut citer les dialkyldicarboxylates (brevets US-A-4,256,870 ; 4,476,166); les dialkylacétylènedicarboxylates (brevet US -A-4,347,346); les alcools acétyléniques (brevets US -A- 3,989,866 ; 4,336,364 ; 3,445,420).....

Lesdites compositions durcissables anti-adhérentes peuvent être obtenues par mélange de ses différents constituants ; quelques conditions d'introduction sont à respecter, à savoir introduction de l'inhibiteur d'hydrosilylation avant celle de l'agent de réticulation, avec addition du catalyseur en dernier.

Lesdites compositions durcissables sont fluides à température normale ; leur viscosité est généralement de l'ordre de 100 à 500 mPas. à 25 °C. Elles peuvent être appliquées à l'aide de dispositifs utilisés sur les machines industrielles d'enduction du papier tels que tête d'enduction à cinq rouleaux, systèmes à lames d'air, à barre égalisatrice.....sur des supports ou matériaux souples, puis durcies par circulation dans des fours-tunnels chauffés à 70-200 °C ; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180 °C. Lesdites compositions peuvent être déposées sur tout matériau ou substrat souple tel que papiers de types divers (supercalendré, couché...), cartons,feuilles de cellulose, feuilles en métal, films de matière plastique (polyester, polyéthylène, polypropylène...) ....
Les quantités de compositions déposées sont de l'ordre de 0,5 à 2 g par m2 de surface à traiter, ce qui correspond au dépot de couches de l'ordre de 0,5 à 2 mm.

Les matériaux ou supports ainsi enduits peuvent ultérieurement être mis en contact avec des matières adhésives quelconques caoutchoucs, acryliques ou autres, sensibles à la pression . La matière adhésive est alors aisément détachable dudit support ou matériau.

### Exemples

1) - Préparation du modulateur M₁ (comparatif)
   - On mélange :
      - une solution à 50 % en poids dans le xylène, d'une résine polyméthylvinylsiloxane A comportant :
         . 36 % molaire de motifs (M) Me₃ Si O _{1/2}
         . 6 % molaire de motifs (D^{Vi}) Me Vi Si O
         . 58 % molaire de motifs (Q) Si O₂
      - et une huile polyméthylvinylsiloxane C présentant une viscosité de 200 mPa.s. à 25°C et contenant 1 % molaire de fonctions SiVi sous forme de motifs Me₂ Vi Si O _{1/2} et Me Vi Si O selon des proportions correspondant à un rapport pondéral A/C de 45/55 en produit secs.
   Le xylène est éliminé sous vide à 100°C.
   Après refroidissement à température ambiante, on ajoute 0,15 partie en poids d'éthynylcyclohexanol pour 100 parties en poids de polymères silicones.
   Le modulateur M₁ obtenu présente une viscosité de l'ordre de 3.000 mPa.s. à 25°C.
2) - Préparation du modulateur M₂ (comparatif)
   - On mélange :
      - une solution à 30 % en poids dans le toluène, d'une résine polyméthylhydrogenosiloxane B comportant :
         . 39 % molaire de motifs (M) Me₃ Si O _{1/2}
         . 3,5 % molaire de motifs (D') Me H Si O
         . 56,5 % molaire de motifs (Q) Si O₂
      - et l'huile polydiméthylvinylsiloxane C ci-dessus décrite selon des proportions correspondant à un rapport pondéral B / C de 45/55 en produit secs.
   Le toluène est éliminé sous vide à 100°C.
   Après refroidissement à température ambiante, on ajoute 0,15 partie en poids d'éthynylcyclohexanol pour 100 parties en poids de polymères silicones.
   Le modulateur M₂ obtenu présente une viscosité de l'ordre de 3.500 mPa.s. à 25°C.
3) - Préparation du modulateur M₃
   - On mélange :
      - la solution de résine (M D^{Vi} Q) A ci-dessus décrite
      - et la solution de résine (M D' Q) B ci-dessus décrite selon les proportions correspondant à un rapport pondéral A / B de 50/50 en produits secs.
   On ajoute à ce mélange l'huile polydiméthylvinylsiloxane C ci-dessus décrite, en quantité telle que le rapport pondéral A + B / C corresponde à 45/55 en produits secs.
   Après élimination sous vide à 100°C, du xylène et du toluène et refroidissement à température ambiante, on ajoute 0,15 partie en poids d'éthynylcyclohexanol pour 100 parties en poids de polymères silicones.
   Le modulateur M₃ obtenu présente une viscosité de l'ordre de 4000 mPa.s. à 25°C.
4) - Préparation du modulateur M₄ (comparatif)
   - On mélange :
      - la solution de résine (MD^{Vi}Q) A ci-dessus décrite
      - et une résine fluide vinylpolyorganosiloxane C' présentant une viscosité de 20 mPa.s. à 25°C et comportant :
         . 51 % molaire de motifs Me₃ Si O _{1/2}
         . 6 % molaire de motifs Me Vi Si O
         . 38 % molaire de motifs SiO₂
         . 6% molaire de motifs C₂H₅SiO_{1/2}
      selon des proportions correspondant à un rapport pondéral A / C'de 45/55 en produits secs.
   Après élimination du xylène et refroidissement, le modulateur obtenu M₄ présente une viscosité de 980 mPa.s. à 25°C.
5) - Préparation du modulateur M₅ (comparatif)
   - On mélange :
      - la solution de résine (MD'Q) B ci-dessus décrite
      - et la résine fluide polyméthylvinylsiloxane C' ci-dessus décrite
      selon des proportions correspondant à un rapport pondéral B /C' de 45/55 en produits sec
   Après élimination du toluène et refroidissement, le modulateur obtenu M₅ présente une viscosité de 1050 mPas. à 25°C.
6) - Préparation du modulateur M₆
   - On mélange :
      - la solution de résine (M D^{Vi} Q) A ci-dessus décrite
      - et la solution de résine (M D' Q) B ci-dessus décrite
      selon les proportions correspondant à un rapport pondéral A/B de 50/50 en produits secs.
   On ajoute à ce mélange la résine polydiméthylvinylsiloxane C' ci-dessus décrite, en quantité telle que le rapport pondéral A + B /C' corresponde à 45/55 en produits secs.
   Après élimination sous vide à 100°C, du xylène et du toluène et refroidissement à température ambiante, on ajoute 0,15 partie en poids d'éthynylcyclohexanol pour 100 parties en poids de polymères silicones.
   Le modulateur M₆ obtenu présente une viscosité de l'ordre de 1100 mPa.s. à 25°C.
7) - Préparation du modulateur M₇ (comparatif)
   - On mélange :
      - la solution de résine (M D^{Vi} Q) A ci-dessus décrite
      - et l'huile polydiméthylvinylsiloxane C ci-dessus décrite selon les proportions correspondant à un rapport pondéral A / C de 70/30 en produits secs.
   Le xylène est éliminé sous vide à 100°C.
   Au mélange de forte viscosité obtenu (2,5 x 10⁶ mPa.s. à 25°C), on ajoute à 100°C, après avoir supprimé le vide, 10 parties en poids de tetradécène pour 90 parties en poids de polymères silicones.
   Après refroidissement à température ambiante du mélange, on ajoute 0,15 partie en poids d'éthynylcyclohexanol pour 100 parties de polymères silicones.
   Le modulateur M₇ obtenu présente une viscosité de l'ordre de 6000 mPa.s. à 25°C.
8) - Préparation du modulateur M₈ (comparatif)
   - On mélange :
      - la solution de résine (MD'Q) B ci-dessus décrite
      - et l'huile polydiméthylvinylsiloxane C ci-dessus décrite selon des proportions correspondant à un rapport pondéral B / C de 70/30 en produits secs
   Le toluène est éliminé sous vide à 100°C.
   Au mélange de forte viscosité obtenu (2,5 x 10⁶ mPa.s. à 25°C), on ajoute à 100°C, après avoir supprimé le vide, 10 parties en poids de tetradécène pour 90 parties en poids de polymères silicones.
   Après refroidissement à température ambiante du mélange, on ajoute 0,15 partie en poids d'éthynylcyclohexanol pour 100 parties de polymères silicones.
   Le modulateur M₈ obtenu présente une viscosité de l'ordre de 6300 mPa.s. à 25°C.
9) - Préparation du modulateur M₉
   - On mélange :
      - la solution de résine (M D^{Vi} Q) A ci-dessus décrite
      - et la solution de résine (M D' Q) B ci-dessus décrite
      selon les proportions correspondant à un rapport pondéral A / B de 50/50 en produits secs.
   On ajoute à ce mélange l'huile polydiméthylvinylsiloxane C ci-dessus décrite, en quantité telle que le rapport pondéral A + B / C corresponde à 70/30 en produits secs.
   Le xylène et le toluène sont éliminés sous vide à 100°C.
   Au mélange de forte viscosité obtenu (>2,5 x 10⁶ mPa.s. à 25°C), on ajoute à 100°C, après avoir supprimé le vide, 10 parties en poids de tetradécène pour 90 parties en poids de polymères silicones.
   Après refroidissement à température ambiante du mélange, on ajoute 0,15 partie en poids d'éthynylcyclohexanol pour 100 parties en poids de polymères silicones. Le modulateur M₉ obtenu présente une viscosité de l'ordre de 8.200 mPa.s. à 25°C.

Les modulateurs M₁ à M₉, ci-dessus obtenus, sont utilisés comme suit pour préparer des bains d'enduction destinés à fournir, après durcissement dans un four, des revêtements présentant des niveaux d'anti-adhérence variables vis-à-vis de différents adhésifs.

### Préparation de bains d'enduction

On mélange par introduction successive des différents constituants du bain :
- (100-x) parties en poids d'une huile polyméthylvinylsiloxane (D) présentant une viscosité de 400 mPa.s. à 25 °C et contenant 1 % molaire de fonctions SiVi sous forme de motifs Me₂ Vi Si O _{1/2} et Me Vi Si O et renfermant environ ,15 % de son poids d'éthynylcyclohexanol.
- x parties en poids de modulateur M₁ à M₉
- une huile polyméthylhydrogenosiloxane (E) contenant environ 1,5 % molaire de fonctions Si H, en quantité suffisante pour obtenir un rapport molaire final nombre total de fonctions Si Vi / nombre total de fonctions Si H de l'ordre de 1,4.
- 90 parties par million, exprimées en platine, d'un complexe du platine préparé à partir d'acide chloroplatinique et de divinyl-1,3 tetraméthyl -1,1,3,3 disiloxane, comme décrit à l'exemple 1 du brevet US-A-3,814,730.
Après homogénisation vigoureuse, les mélanges sont prêts pour l'enduction.

### Opération d'enduction

L'appareil utilisé est une machine pilote ROTOMEC® (commercialisée par ROTOMEC) équipée d'une tête sans solvant à cinq cylindres.
Le support utilisé est du papier glassine
- soit de type SIBILLE® 9564 commercialisé par SIBILLE
- soit de type KAEMMERER® AV 100 commercialisé par KAEMMERER dont le grammage est de l'ordre de 60 à 70 g/m².
L'enduction est réalisée à une vitesse de défilement du papier de 150 m/mn, ce qui correspond à un temps de séjour de 2 secondes.
Les supports enduits sont prélevés immédiatement à la sortie de la machine.
La quantité de revêtement déposée est mesurée par fluorescence X ; elle est de l'ordre de 1 g/m² de support.

### Comportement des papiers enduits vis-à-vis des adhésifs

Les papiers enduits obtenus sont mis en contact avec les rubans adhésifs suivants
- TESA^{â}4651 (caoutchouc)
- TESA^{â} 4154 (caoutchouc)
- TESA^{â}4970 (acrylique)
commercialisés par BEIERSDORF, ainsi qu'avec l'adhésif émulsion ACRONAL® V 205 (acrylique) commercialisée par B.A.S.F.
Les complexes formés sont déposés dans une salle conditionnée (température de 23°C ± 2°C ; degré d'humidité de 50 % ± 5).
La qualité des revêtements est évaluée par mesure de la force d'adhérence (ou de décollement), exprimée en cN/2,5 cm selon le test FINAT n° 10 à l'aide d'un dynamomètre INSTRON® (commercialisé par INSTRON) avec une vitesse de décollement de 0,3 m/mn
Les résultats des mesures sont donnés aux tableaux 1 et 2
Le tableau 3 montre l'évolution des performances du modulateur M₆ lors du vieillissement des complexes.
On constate que les modulateurs, faisant l'objet de l'invention, sont polyvalents.
En effet, leur performances vis-à-vis
- des adhésifs acryliques sont
. très nettement supérieures à celles des résines solides (à l'état sec) à fonctions SiH ;
. du même ordre de grandeur que celles des résines solides (à l'état sec) à fonctions SiVi.

- des adhésifs caoutchoucs sont
. supérieures à celles des résines solides (à l'état sec) à fonctions SiVi
. du même ordre de grandeur que celles des résines solides (à l'état sec) à fonctions SiH.

**TABLEAU 1**

| | **Force de décollement en cN/2,5cm** | | | | | | | | |
|---|---|---|---|---|---|---|---|---|---|
| **% modulateur** | **Ruban TESA 4651 (caoutchouc)** | | | | | | | | |
| | **M**_{**1**} | **M**_{**2**} | **M**_{**3**} | **M**_{**4**} | **M**_{**5**} | **M**_{**6**} | **M**_{**7**} | **M**_{**8**} | **M**_{**9**} |
| 0 | 11 | 11 | 11 | 11 | 11 | 11 | 11 | 11 | 11 |
| 15 | - | - | - | 30 | 26 | 33 | 31 | 30 | 30 |
| 25 | 35 | 38 | 37 | - | - | - | 41 | 41 | 47 |
| 30 | - | - | - | 48 | 43 | 50 | - | - | - |
| 40 | - | - | - | - | - | - | 60 | 64 | 70 |
| 50 | 65 | 75 | 71 | 80 | 73 | 78 | - | - | - |
| 60 | - | - | - | - | - | - | 135 | 155 | 170 |
| 70 | - | - | - | 155 | 141 | 160 | - | - | - |
| 75 | 165 | 165 | 168 | - | - | - | 225 | 241 | 265 |
| 100 | 410 | 420 | - | - | - | - | - | - | - |

| | **Ruban TESA 4154 (caoutchouc)** | | | | | | | | |
|---|---|---|---|---|---|---|---|---|---|
| | **M**_{**1**} | | **M**_{**2**} | **M**_{**3**} | | M₄ | **M**_{**5**} | | **M**_{**6**} |
| 0 | 10 | | 10 | 10 | | 10 | 10 | | 10 |
| 15 | - | | - | - | | 19 | 19 | | 21 |
| 25 | 27 | | 29 | 28 | | - | - | | - |
| 30 | - | | - | - | | 36 | 32 | | 38 |
| 50 | 58 | | 60 | 62 | | 69 | 59 | | 74 |
| 60 | - | | - | - | | - | - | | - |
| 70 | - | | - | - | | 135 | 102 | | 145 |
| 75 | 110 | | 120 | 130 | | - | - | | - |
| 100 | 215 | | 250 | - | | - | - | | - |

**TABLEAU 2**

| | **Force de décollement en cN/2,5cm** | | | | | | | | |
|---|---|---|---|---|---|---|---|---|---|
| **% modulateur** | **Ruban TESA L4970 (acrylique)** | | | | | | | | |
| | **M**_{**1**} | **M**_{**2**} | **M**_{**3**} | **M**_{**4**} | **M**_{**5**} | **M**_{**6**} | **M**_{**7**} | **M**_{**8**} | **M**_{**9**} |
| 0 | 15 | 15 | 15 | 15 | 15 | 15 | 15 | 15 | 15 |
| 15 | - | - | - | 28 | 23 | 26 | - | - | - |
| 25 | 38 | 30 | 36 | 38 | 29 | 36 | 52 | 28 | 57 |
| 40 | - | - | - | - | - | - | 95 | 36 | 90 |
| 50 | 71 | 42 | 69 | 83 | 45 | 75 | - | - | - |
| 60 | - | - | - | - | - | - | 200 | 60 | 215 |
| 70 | - | - | - | 202 | 66 | 185 | - | - | - |
| 75 | 200 | 63 | 190 | - | - | - | 315 | - | 300 |
| 100 | 500 | 105 | - | - | - | -- | - | - | - |

| | **Adhésif émulsion ACRONAL V205 (acrylique)** | | | | | | | | |
|---|---|---|---|---|---|---|---|---|---|
| | **M**_{**1**} | | **M**_{**2**} | **M**_{**3**} | | **M**_{**7**} | **M8** | | **M**_{**9**} |
| 0 | 16 | | 16 | 16 | | 16 | 16 | | 16 |
| 25 | 50 | | 22 | 44 | | 54 | 23 | | 56 |
| 40 | - | | - | - | | 100 | 30 | | 103 |
| 50 | 125 | | 45 | 108 | | - | - | | - |
| 60 | - | | - | - | | 195 | 63 | | 195 |
| 70 | - | | - | - | | - | - | | - |
| 75 | 325 | | 102 | 282 | | 350 | - | | 395 |
| 100 | >600 | | 150 | - | | - | - | | - |

**TABLEAU 3**

| **adhésif** | **% modulateur M6** | **Force de décollement en cN/2,5cm après** | | | | |
|---|---|---|---|---|---|---|
| | | **0 jour** | **5 jours** | **15 jours** | **30 jours** | **60 jours** |
| **TESA 4651** | 0 | 11 | 12 | 10 | 11 | 11 |
| | 15 | 33 | 34 | 32 | 33 | 32 |
| | 30 | 50 | 55 | 53 | 51 | 54 |
| | 50 | 78 | 85 | 80 | 79 | 80 |
| | 70 | 160 | 175 | 170 | 163 | 163 |
| **TESA 4154** | 0 | 10 | 12 | 13 | 16 | 21 |
| | 15 | 21 | 28 | 33 | 37 | 41 |
| | 30 | 38 | 45 | 51 | 62 | 70 |
| | 50 | 74 | 79 | 88 | 92 | 97 |
| | 70 | 145 | 150 | 160 | 168 | 173 |
| **TESA L4970** | 0 | 15 | 18 | 16 | 14 | 16 |
| | 15 | 26 | 34 | 30 | 28 | 28 |
| | 30 | 44 | 45 | 60 | 59 | 62 |
| | 50 | 75 | 84 | 84 | 74 | 77 |
| | 70 | 185 | 192 | 187 | 189 | 189 |

## Revendications

1. Système modulateur d'adhérence à base de :
• (A) 30 à 70 parties en poids d'au moins une résine organopolysiloxane se présentant sous forme solide à l'état sec et à 25°C, constituée d'au moins deux types de motifs siloxy différents R₃SiO_{1/2} (motif M), et SiO₂ (motif Q), et/ou RSiO_{3/2} (motif T), et éventuellement de motifs R₂SiO_{2/2} (motif D),
- les radicaux R étant identiques ou différents et représentant des groupes alkyle en C₁-C₁₈, cycloalkyle en C₁-C₁₈, alcényle en C₂-C₂₀, et/ou alcényl(C₃-C₉)-oxyalkylène(C₂-C₄),
- au moins 80% molaire des radicaux R représentant un groupe méthyle,
- et ladite résine contenant au moins 0,1% molaire desdits groupes alcényle ou alcényloxyalkylène identiques ou différents liés au silicium ("Si alcényle"), avec un rapport nombre de motifs (M))/nombre de motifs (Q) et/ou (T) compris entre 0,6 et 1, le nombre de motifs (D) éventuels étant compris entre 0,5 et 10 pour 100 moles de résine ;
• (B) 70 à 30 parties en poids d'au moins une résine organopolysiloxane se présentant sous forme solide à l'état sec et à 25°C, constituée d'au moins deux types de motifs siloxy différents R'₃SiO_{1/2} (motif M) et SiO₂ (motif Q) et/ou R'SiO_{3/2} (motif T), et éventuellement de motifs R'₂SiO (motif D),
- les radicaux R' étant semblables ou différents et représentant de l'hydrogène ou des groupes de définition semblable à celle de R,
- au moins 80% molaire des radicaux R' représentant un groupe méthyle, - et ladite résine contenant au moins 0,5% molaire d'atomes d'hydrogène liés directement au silicium ("SiH"), avec un rapport nombre de motifs (M)/nombre de motifs (Q) et/ou (T) compris entre 0,6 et 1, le nombre de motifs (D) éventuels étant compris entre 0,5 et 10 pour 100 moles de résine ;
• lesdites résines (A) et (B) contenant moins de 10% molaire de fonctions silanol;
• (C) et au moins un solvant et/ou au moins un diluant du mélange de résines (A) et (B).

2. Système modulateur d'adhérence selon la revendication 1 caractérisé en ce que le système modulateur est à base de 40 à 60 parties en poids de résine (A) et à base de 60 à 40 parties en poids de résine (B).

3. Système modulateur d'adhérence selon la revendication 1 ou 2 caractérisé en ce que les résines (A) et (B) contiennent moins de 0,5% molaire de fonctions silanol.

4. Système modulateur d'adhérence selon l'une quelconque des revendications 1 à 3, caractérisé en ce que la résine (A) est une résine MD^{Vi}Q où les groupes vinyle sont inclus dans les motifs (D), MM^{Vi}Q où les groupes vinyle sont inclus dans une partie des motifs (M), MD^{Vi}T où les groupes vinyle sont inclus dans les motifs (D), MM^{Héxényl}Q où les groupes héxényle sont inclus dans une partie des motifs (M), MM^{Allyloxypropyl}Q où les groupes allyloxypropyle sont inclus dans une partie des motifs (M).

5. Système modulateur d'adhérence selon l'une quelconque des revendications 1 à 4, caractérisé en ce que la résine (B) est une résine MD'Q où les atomes d'hydrogène liés au silicium sont inclus dans les motifs (D), MM'Q où les atomes d'hydrogène liés au silicium sont inclus dans une partie des motifs (M), MM'DQ où les atomes d'hydrogène liés au silicium sont inclus dans une partie des motifs (M), MDT' où les atomes d'hydrogène liés au silicium sont inclus dans les motifs (T).

6. Système modulateur d'adhérence selon l'une quelconque des revendications 1 à 5, caractérisé en ce que le solvant ou le diluant (C) est choisi parmi :
• (1) des solvants hydrocarbonés classiques des résines silicone, de type aromatique, aliphatique saturé, solvants chlorés, mis en oeuvre selon une quantité correspondant à 50-70 parties en poids de résines solides (A)+(B) ;
• (2) des solvants dits "réactifs" tels que :
(a) des résines organopolysiloxane liquides, dont les radicaux organiques sont des groupes alkyle ou cycloalkyle en C₁-C₁₈, alcényle en C₂-C₂₀, de préférence en C₂-C₁₂, présentant un rapport nombre de motifs (M)/nombre de motifs (Q) et/ou (T) de l'ordre de 1 à 4 et éventuellement de 1 à 5 motifs (D) pour 100 moles de résine liquide, et contenant de 0,5 à 5% molaire de fonctions alcényle liées au silicium ("Si alcényle") ou d'atomes d'hydrogène liés au silicium ("SiH"), résines présentant une viscosité à 25°C inférieurs à 100 mPa.s., et/ou,
(b) des huiles organopolysiloxanes fluides, dont les radicaux organiques sont des groupes alkyle ou cycloalkyle en C₁-C₁₈, alcényle en C₂-C₂₀, alcényl(C₃-C₉)oxyalkylène(C₂-C₄), huiles contenant de 0,2 à 5% molaire de fonctions alcényle ou alcényloxyloalkylène liées au silicium, en bout(s) de chaîne ou dans la chaîne, lesdites huiles présentant une viscosité inférieure à 200 mPa.s. à 25°C et/ou,
(c) des hydrocarbures à insaturation(s) oléfinique(s) tels que des oléfines en C₁₄-C₁₈, dibutylmaléate, décylvinyléther, docécylvinyléther, camphène, et/ou méta-bis isopropénylbenzène,
lesdits solvants dits "réactifs" étant mis en oeuvre selon une quantité correspondant à 20-50 parties en poids pour 80-50 parties en poids de résines solides (A)+(B) ;
• (3) des émulsions aqueuses d'agents tensio-actifs non-ioniques contenant de l'ordre de 1-3% en poids d'agent tensio-actif, mises en oeuvre à raison de 40-70 parties en poids pour 60-30 parties en poids de résines solides (A)+(B).

7. Compositions durcissables anti-adhérentes renfermant:
• (100-X) parties en poids d'un polydiorganosiloxane linéaire (D) bloqué par des groupes terminaux triorganosiloxanes, lesdits radicaux organiques étant des groupes alkyle en C₁-C₁₈, cycloalkyle en C₁-C₁₈, alcényle en C₂-C₂₀, alcényl(C₃-C₉)-oxyalkylène(C₂-C₄), au moins 80% molaire desdits radicaux étant un groupe méthyle, au moins 0,1% molaire desdits radicaux organiques étant des groupes alcényle ou alcényloxyalkylène identiques ou différents liés directement au silicium ("Si alcényle") ;
• (X) parties en poids du système modulateur à base des constituants (A), (B) et (C) faisant l'objet de l'une quelconque des revendications 1 à 6, la valeur de x pouvant aller de 5 à 100;
• un agent inhibiteur d'hydrosilylation ;
• un agent de réticulation polyorganohydrogénosiloxane linéaire (E) contenant de 1,6 à 0,9% molaire d'atomes d'hydrogène liés directement au silicium ("SiH") en bout(s) de chaîne et/ou dans la chaîne, les radicaux organiques identiques ou différents étant des groupes alkyles en C₁-C₁₈, au moins 80% molaire desdits radicaux organiques étant des groupes méthyle, la quantité d'agent de réticulation étant telle que le rapport R nombre de moles de "SiH" provenant de la résine (B), du solvant "réactif" (C) et de l'agent de réticulation (E)/nombre de moles de "Si alcényle" provenant de la résine (A), du solvant "réactif" (C) et du polydiorganosiloxane (D) linéaire bloqué soit supérieur à 1 ;
• et une quantité efficace d'un catalyseur d'hydrosilylation.

8. Compositions durcissables selon la revendication 7 caractérisées en ce que le rapport R est compris entre 1,1 à 1,6.

9. Compositions selon l'une quelconque des revendications 7 ou 8, caractérisées en ce que le polydiorganosiloxane linéaire bloqué à fonctions "Si alcényle" (D) présente une viscosité de l'ordre de 150 à 1.000 mPa.s à 25°C.

10. Compositions selon l'une quelconque des revendications 7, 8 ou 9, caractérisées en ce que l'agent de réticulation à fonctions "SiH" (E) présente une viscosité de l'ordre de 5 à 150 mPa.s à 25°C.

## Patentansprüche

1. Haftungsregulierendes System auf der Basis von:
• (A) 30 bis 70 Gewichtsteilen mindestens eines Organopolysiloxanharzes, das in trockenem Zustand und bei 25 °C als Feststoff vorliegt und das aus mindestens zwei Arten verschiedener Siloxy-Einheiten: R₃SiO_{1/2} (M-Einheiten) und SiO₂ (Q-Einheiten) und/oder RSiO_{3/2} (T-Einheiten) sowie gegebenenfalls aus R₂SiO_{2/2}-Einheiten (D-Einheiten) besteht, wobei
- die Reste R, die gleich oder verschieden sein können, (C₁-C₁₈)-Alkylgruppen, (C₁-C₁₈)-Cycloalkylgruppen, (C₂-C₂₀)-Alkenylgruppen und/oder (C₃-C₉)-Alkenyl-(C₂-C₄)-oxyalkylengruppen darstellen,
- mindestens 80 Mol-% der Reste R eine Methylgruppe darstellen und
- das besagte Harz mindestens 0,1 Mol-% der besagten Alkenyl- oder Alkenyloxyalkylengruppen enthält, die gleich oder verschieden sein können und die an das Siliciumatom gebunden sind ("Si-Alkenyl"), wobei das Verhältnis *Anzahl der M-Einheiten/Anzahl der Q- und/oder T-Einheiten* im Bereich von 0,6 bis 1 liegt und die Zahl der D-Einheiten gegebenenfalls 0,5 bis 10 mol pro 100 mol Harz beträgt;
• (B) 70 bis 30 Gewichtsteilen mindestens eines Organopolysiloxanharzes, das in trockenem Zustand und bei 25 °C als Feststoff vorliegt und das aus mindestens zwei Arten verschiedener Siloxy-Einheiten: R'₃SiO_{1/2} (M-Einheiten) und SiO₂ (Q-Einheiten) und/oder R'SiO_{3/2} (T-Einheiten) sowie gegebenenfalls aus R'₂SiO-Einheiten (D-Einheiten) besteht, wobei
- die Reste R', die gleich oder verschieden sein können, Wasserstoffatome oder Gruppen entsprechend der Definition von R darstellen,
- mindestens 80 Mol-% der Reste R' eine Methylgruppe darstellen und
- das besagte Harz mindestens 0,5 Mol-% direkt an das Siliciumatom gebundene Wasserstoffatome ("SiH") enthält, wobei das Verhältnis *Anzahl der M-Einheiten*/ *Anzahl der Q- und/oder T-Einheiten* im Bereich von 0,6 bis 1 liegt und die Zahl der D-Einheiten gegebenenfalls 0,5 bis 10 mol pro 100 mol Harz beträgt;
wobei diese Harze (A) und (B) weniger als 10 Mol-% Silanol-Gruppen enthalten; und
• (C) zumindest einem Lösungsmittel und/oder zumindest einem Verdünnungsmittel des Gemischs der Harze (A) und (B).

2. Haftungsregulierendes System nach Anspruch 1, dadurch gekennzeichnet, daß 40 bis 60 Gewichtsteile Harz (A) und 60 bis 40 Gewichtsteile Harz (B) die Grundlage dieses regulierenden Systems bilden.

3. Haftungsregulierendes System nach Anspruch 1 oder 2, dadurch gekennzeichnet, daß die Harze (A) und (B) weniger als 0,5 Mol-% Silanolgruppen enthalten.

4. Haftungsregulierendes System nach einem der Ansprüche 1 bis 3, dadurch gekennzeichnet, daß das Harz (A) ein MD^{Vi}Q-Harz, in dem die D-Einheiten Vinylgruppen enthalten, ein MM^{Vi}Q-Harz, in dem ein Teil der M-Einheiten Vinylgruppen enthält, ein MD^{Vi}T-Harz, in dem die D-Einheiten Vinylgruppen enthalten, ein MM^{Hexenyl}Q-Harz, in dem ein Teil der M-Einheiten Hexenylgruppen enthält, oder ein MM^{Allyloxypropyl}Q-Harz ist, in dem ein Teil der M-Einheiten Allyloxypropylgruppen enthält.

5. Haftungsregulierendes System nach einem der Ansprüche 1 bis 4, dadurch gekennzeichnet, daß das Harz (B) ein MD'Q-Harz, in dem die D-Einheiten siliciumgebundene Wasserstoffatome enthalten, ein MM'Q-Harz, in dem ein Teil der M-Einheiten siliciumgebundene Wasserstoffatome enthält, ein MM'DQ-Harz, in dem ein Teil der M-Einheiten siliciumgebundene Wasserstoffatome enthält, oder ein MDT'-Harz ist, in dem die T-Einheiten siliciumgebundene Wasserstoffatome enthalten.

6. Haftungsregulierendes System nach einem der Ansprüche 1 bis 5, dadurch gekennzeichnet, daß das Lösungsmittel beziehungsweise das Verdünnungsmittel (C) ausgewählt ist unter:
• (1) Kohlenwasserstoffen, die klassische Lösungsmittel für Siliconharze darstellen: Aromaten, gesättigte Aliphaten und chlorierte Lösungsmittel, die in einer Menge entsprechend 50-70 Gewichtsteilen der festen Harze (A) + (B) eingesetzt werden;
• (2) sogenannten "reaktiven" Lösungsmitteln, wie:
(a) flüssigen Organopolysiloxanharzen, deren organische Reste (C₁-C₁₈)-Alkyl- oder Cycloalkylgruppen oder (C₂-C₂₀)- und vorzugsweise (C₂-C₁₂)-Alkenylgruppen sind, wobei das Verhältnis *Anzahl der M-Einheiten/Anzahl der Q- und/oder T-Einheiten* im Bereich von 1 bis 4 liegt und die Zahl der D-Einheiten gegebenenfalls 1 bis 5 mol pro 100 mol des flüssigen Harzes beträgt, wobei diese flüssigen Organopolysiloxanharze 0,5 bis 5 Mol-% siliciumgebundene Alkenylgruppen ("Si-Alkenyl") oder siliciumgebundene Wasserstoffatome ("SiH") enthalten und bei 25 °C eine Viskosität kleiner 100 mPa.s aufweisen, und/oder
(b) flüssigen Organopolysiloxanölen, deren organische Reste (C₁-C₁₈)-Alkyl- oder Cycloalkylgruppen, (C₂-C₂₀)-Alkenylgruppen oder (C₃-C₉)-Alkenyl(C₂-C₄)-oxyalkylengruppen sind, wobei diese Öle an dem beziehungsweise den Kettenenden oder in der Kette 0,2 bis 5 Mol-% siliciumgebundene Alkenyl- oder Alkenyloxyalkylengruppen enthalten und bei 25 °C eine Viskosität kleiner 200 mPa.s aufweisen, und/oder
(c) Kohlenwasserstoffen mit einer oder mehreren olefinischen Doppelbindungen, wie (C₁₄-C₁₈)-Olefinen, Dibutylmaleat, Decylvinylether, Dodecylvinylether, Camphen und/oder meta-Bis(isopropenyl)-benzol,
wobei diese sogenannten "reaktiven" Lösungsmittel in einer Menge entsprechend 20-50 Gewichtsteilen auf 80- 50 Gewichtsteile der festen Harze (A) + (B) eingesetzt werden;
• (3) wässerigen Emulsionen nichtionischer grenzflächenaktiver Mittel, die ungefähr 1 bis 3 Gew.-% grenzflächenaktives Mittel enthalten und die in einer Menge von 40-70 Gewichtsteilen auf 60-30 Gewichtsteile der festen Harze (A) + (B) eingesetzt werden.

7. Nichthaftende härtbare Zusammensetzungen, die enthalten:
• (100-X) Gewichtsteile eines geradkettigen Polydiorganosiloxans (D), dessen Kettenabbruch mit Triorganosiloxan-Endgruppen erfolgt, wobei die besagten organischen Reste (C₁-C₁₈)-Alkylgruppen, (C₁-C₁₈)-Cycloalkylgruppen, (C₂-C₂₀)-Alkenylgruppen oder (C₃-C₉)-Alkenyl-(C₂-C₄)-oxyalkylengruppen sind, die zu mindestens 80 Mol-% aus Methylgruppen und mindestens 0,1 Mol-% aus Alkenyl- oder Alkenyloxyalkylengruppen bestehen, die gleich oder verschieden sein können und die direkt an das Siliciumatom gebunden sind ("Si-Alkenyl");
• (X) Gewichtsteilen des haftungsregufierenden Systems auf der Basis der Bestandteile (A), (B) und (C), das Gegenstand eines der Ansprüche 1 bis 6 ist, wobei der Zahlenwert von x im Bereich von 5 bis 100 liegt;
• einen Hydrosilylierungsinhibitor;
• ein lineares Polyorganohydrogensiloxan (E) als Vernetzungsmittel, das an dem beziehungsweise den Kettenenden oder in der Kette 0,9 bis 1,6 Mol-% direkt an das Siliciumatom gebundene Wasserstoffatome ("SiH") enthält und dessen organische Reste gleiche oder verschiedene (C₁-C₁₈)-Alkylgruppen sind, die zu mindestens 80 Mol-% aus Methylgruppen bestehen, wobei das Vernetzungsmittel in einer solchen Menge vorliegt, daß das Verhältnis *R Anzahl der aus dem Harz (B), dem "reaktiven" Lösungsmittel (C) und dem Vernetzungsmittel (E) stammenden "SiH"-Spezies [mol]/Anzahl der aus dem Harz (A), dem "reaktiven" Lösungsmittel (C) und dem geradkettigen Polydiorganosiloxan mit Endgruppen (D) stammenden "Si-Alkenyl"-Spezies [mol]* größer als 1 ist;
und
• eine wirksame Menge eines Hydrosilylierungskatalysators.

8. Härtbare Zusammensetzungen nach Anspruch 7, dadurch gekennzeichnet, daß das Verhältnis R im Bereich von 1,1 bis 1,6 liegt.

9. Zusammensetzungen nach einem der Ansprüche 7 und 8, dadurch gekennzeichnet, daß das geradkettige Polydiorganosiloxan mit Endgruppen und "Si-Alkenyl"-Funktionen (D) bei 25 °C eine Viskosität in der Größenordnung von 150 bis 1000 mPa.s aufweist.

10. Zusammensetzungen nach einem der Ansprüche 7, 8 und 9, dadurch gekennzeichnet, daß das Vernetzungsmittel mit "SiH"-Funküonen (E) bei 25 °C eine Viskosität in der Größenordnung von 5 bis 150 mPa.s aufweist.

## Claims

1. Adhesion modifier system based on:
- (A) 30 to 70 parts by weight of at least one organopolysiloxane resin which is in solid form in the dry state and at 25°C, consisting of at least two different types of siloxy units R₃SiO_{1/2} (M unit) and SiO₂ (Q unit) and/or RSiO_{3/2} (T unit), and optionally of R₂SiO_{2/2} units (D unit),
- the radicals R being identical or different and denoting C₁-C₁₈ alkyl, C₁-C₁₈ cycloalkyl, C₂-C₂₀ alkenyl and/or (C₃-C₉ alkenyl)oxy-alkylene(C₂-C₄) groups,
- at least 80 mol% of the radicals R denoting a methyl group,
- and the said resin containing at least 0.1 mol% of the said identical or different alkenyl or alkenyloxyalkylene groups bonded to silicon ("Si alkenyl"), with a ratio of the number of (M) units/number of (Q) and/or (T) units of between 0.6 and 1, the number of optional (D) units being between 0.5 and 10 per 100 moles of resin;
- (B) 70 to 30 parts by weight of at least one organopolysiloxane resin which is in solid form in the dry state and at 25°C, consisting of at least two different types of siloxy units R'₃SiO_{1/2} (M unit) and SiO₂ (Q unit) and/or R'SiO_{3/2} (T unit), and optionally of R'₂SiO units (D unit),
- the radicals R' being similar or different and denoting hydrogen or groups with a definition similar to that of R,
- at least 80 mol% of the radicals R' denoting a methyl group,
- and the said resin containing at least 0.5 mol% of hydrogen atoms bonded directly to silicon ("SiH"), with a ratio of the number of (M) units/number of (Q) and/or (T) units of between 0.6 and 1, the number of optional (D) units being between 0.5 and 10 per 100 moles of resin;
- the said resins (A) and (B) containing less than 10 mol% of silanol functional groups;
- (C) and at least one solvent and/or at least one diluent for the mixture of resins (A) and (B).

2. Adhesion modifier system according to Claim 1, characterized in that the modifier system is based on 40 to 60 parts by weight of resin (A) and based on 60 to 40 parts by weight of resin (B).

3. Adhesion modifier system according to Claim 1 or 2, characterized in that the resins (A) and (B) contain less than 0.5 mol% of silanol functional groups.

4. Adhesion modifier system according to any one of Claims 1 to 3, characterized in that the resin (A) is a MD^{Vi}Q resin where the vinyl groups are included in the (D) units, MM^{Vi}Q where the vinyl groups are included in a proportion of the (M) units, MD^{Vi}T where the vinyl groups are included in the (D) units, MM^{Hexenyl}Q where the hexenyl groups are included in a proportion of the (M) units, or MM^{Allyloxypropyl}Q where the allyloxypropyl groups are included in a proportion of (M) units.

5. Adhesion modifier system according to any one of Claims 1 to 4, characterized in that the resin (B) is a resin MD'Q where the hydrogen atoms bonded to silicon are included in the (D) units, MM'Q where the hydrogen atoms bonded to silicon are included in a proportion of the (M) units, MM'DQ where the hydrogen atoms bonded to silicon are included in a proportion of the (M) units, or MDT' where the hydrogen atoms bonded to silicon are included in the (T) units.

6. Adhesion modifier system according to any one of Claims 1 to 5, characterized in that the solvent or the diluent (C) is chosen from:
- (1) conventional hydrocarbon solvents for silicone resins, of aromatic, saturated aliphatic or chlorinated solvent type, used in a quantity corresponding to 50-70 parts by weight of solid resins (A) + (B);
- (2) so-called "reactive" solvents such as:
(a) liquid organopolysiloxane resins in which the organic radicals are C₁-C₁₈ alkyl or cycloalkyl or C₂-C₂₀, preferably C₂-C₁₂, alkenyl groups which have a ratio of the number of (M) units/number of (Q) and/or (T) units of the order of 1 to 4 and optionally from 1 to 5 (D) units per 100 moles of liquid resin, and containing from 0.5 to 5 mol% of alkenyl functional groups bonded to silicon ("Si alkenyl") or of hydrogen atoms bonded to silicon ("SiH"), these resins having a viscosity at 25°C lower than 100 mPa s and/or
(b) fluid organopolysiloxane oils in which the organic radicals are C₁-C₁₈ alkyl or cycloalkyl groups, C₂-C₂₀ alkenyl or (C₃-C₉ alkenyl)oxyalkylene(C₂-C₄) groups, oils containing from 0.2 to 5 mol% of alkenyl or alkenyloxyalkylene functional groups bonded to silicon, at the end(s) of a chain or in the chain, the said oils having a viscosity lower than 200 mPa s at 25°C and/or
(c) hydrocarbons containing olefinic unsaturation(s), such as C₁₄-C₁₈ olefins, dibutyl maleate, decyl vinyl ether, dodecyl vinyl ether, camphene and/or meta-bisisopropenylbenzene,
the so-called "reactive" solvents being used in a quantity corresponding to 20-50 parts by weight per 80-50 parts by weight of solid resins (A) + (B);
- (3) aqueous emulsions of nonionic surface-active agents containing of the order of 1-3 % by weight of surface-active agent, used in a proportion of 40-70 parts by weight per 60-30 parts by weight of solid resins (A) + (B).

7. Curable release compositions containing:
- (100-X) parts by weight of a linear polydiorganosiloxane (D) blocked by triorganosiloxane end groups, the said organic radicals being C₁-C₁₈ alkyl, C₁-C₁₈ cycloalkyl, C₂-C₂₀ alkenyl or (C₃-C₉ alkenyl)-oxyalkylene(C₂-C₄) groups, at least 80 mol% of the said radicals being a methyl group, at least 0.1 mol% of the said organic radicals being identical or different alkenyl or alkenyloxyalkylene groups bonded directly to silicon ("Si alkenyl");
- (X) parts by weight of the modifier system based on the constituents (A), (B) and (C) forming the subject of any one of Claims 1 to 6, it being possible for the value of x to range from 5 to 100;
- a hydrosilylation inhibitor agent;
- a linear polyorganohydrosiloxane crosslinking agent (E) containing from 1.6 to 0.9 mol% of hydrogen atoms bonded directly to silicon ("SiH") at the end(s) of a chain and/or in the chain, the identical or different organic radicals being C₁-C₁₈ alkyl groups, at least 80 mol% of the said organic radicals being methyl groups, the quantity of crosslinking agent being such that the ratio R of the number of moles of "SiH" originating from the resin (B), from the "reactive" solvent (C) and from the crosslinking agent (E)/number of moles of "Si alkenyl" originating from the resin (A), from the "reactive" solvent (C) and from the blocked linear polydiorganosiloxane (D) is higher than 1;
- and an effective quantity of a hydrosilylation catalyst.

8. Curable compositions according to Claim 7, characterized in that the ratio R is between 1.1 and 1.6.

9. Compositions according to either of Claims 7 and 8, characterized in that the blocked linear polydiorganosiloxane containing "Si alkenyl" functional groups (D) exhibits a viscosity of the order of 150 to 1,000 mPa s at 25°C.

10. Compositions according to any one of Claims 7, 8 or 9, characterized in that the crosslinking agent containing "SiH" functional groups (E) exhibits a viscosity of the order of 5 to 150 mPa s at 25°C.
